# EUROPÄISCHE PATENTSCHRIFT

(11) **EP 1 702 803 B1**
(45) Veröffentlichungstag und Bekanntmachung des Hinweises auf die Patenterteilung: **11.04.2012**
(21) Anmeldenummer: 06002696.0
(22) Anmeldetag: 10.02.2006
(51) Int. Cl.: F01N 13/14, B60R 13/08, F16J 15/08, F16L 23/20

(54) **Abschirmteil**
Shielding element
Elément d'ecran

(30) Priorität: 19.03.2005 DE 102005012749
(43) Veröffentlichungstag der Anmeldung: 20.09.2006
(73) Patentinhaber: ElringKlinger AG, 72581 Dettingen (DE)
(72) Erfinder: Heiselbetz, Gerald, 90579 Langenzenn (DE); Hofmann, Dieter, 91452 Wilhermsdorf (DE)
(74) Vertreter: nospat Patent- und Rechtsanwälte Naefe Oberdorfer Schmidt

(56) Entgegenhaltungen:
- EP-A- 0 769 651
- WO-A-00/01931
- WO-A-02/064953
- GB-A- 2 121 104

## Beschreibung

Die Erfindung bezieht sich auf ein Abschirmteil mit einzelnen benachbarten Teilabschnitten, die zumindest teilweise mittels einer Funktionseinheit in eine vorgebbare räumliche Lage zueinander entlang einer Funktionslinie bringbar sind gemäß der Merkmalsausgestaltung des Oberbegriffes des Patentanspruches 1.

Während die Wärmeentwicklung beispielsweise eines sparsamen leistungsoptimierten Dieselmotors am Zylinder- oder Kurbelwellengehäuse sehr gering sein kann, gilt das für "heiße Zonen", wie bei Krümmer, Turbolader, Katalysator etc. keineswegs. Durch die immer kompaktere Konstruktion der Motoren geraten zunehmend Komponenten in enge Nachbarschaft, die thermisch nicht "kompatibel" sind. Demgemäß ist es notwendig, mit sog. Abschirmteilen, wie Hitzeschildern, thermische Motorenkomponenten gegenüber angrenzenden wärmeempfindlichen Aggregaten, wie Sensoren, Kraftstoffleitungen, Druckdosen, Karosserieteilen etc., zu schützen. Die Situation wird durch den Kompaktbau auch insofern verschärft, als die hohe Packungsdichte der Aggregate den kühlenden Luftstrom im Motorraum einengt. Auch Lärmschutzmaßnahmen können dazu mit beitragen. So können beispielsweise Kunststoffbodenplatten, die den Schallaustritt vom Motorraum zur Fahrbahn vermindern sollen, unter Umständen eine wirkungsvolle Isolation erzeugen, mit der Wärme im Motorraum eingeschlossen wird. Katalysatoren zählen wegen ihrer phasenweisen hohen Oberflächentemperatur zu den Hitzequellen, die den Einsatz von schützenden Schildbarrieren jedenfalls erforderlich machen können. Ein typisches Beispiel hierfür sind konstruktive Maßnahmen, wie die Positionierung des Katalysators dicht am Krümmer. Dieses Bauprinzip, das der schnellen Aufheizung des Katalysators und damit der Emissionsminderung in der Kaltstartphase dient, verlegt eine starke Hitzequelle in den Motorraum, wo sich zahlreiche Aggregate auf engem Raum drängen. Ebenfalls eine Ursache für die wachsende Bedeutung von Abschirmteilen, wie Hitzeschildern, ist der Trend zum Einsatz von Thermoplasten. Die hervorragend formbaren, leichten und wirtschaftlichen Werkstoffe setzen sich im Motorraum zusehends durch, erfordern aber ein besonderes Augenmerk im Hinblick auf die Umgebungstemperaturen am Einsatzort, bezogen auf sonstige thermische Motorenteile (Neue Werkstoffe und Entwicklungs-Tools für den Hitzeschutz in MTZ 12/2001, Jahrgang 62, Seite 1044ff).

Abschirmteile bilden in eingebautem Zustand vielfach gewölbte Körper, die die abzuschirmenden Komponenten schalenartig oder rohrartig umgeben. Bei der Abschirmung von Katalysatoren kann ein entsprechendes Hitzeschild eine mehr oder weniger geschlossene, rohrartige Form haben, so dass eine die Hitzequelle umfassende Abschirmung gebildet wird. Bei der Montage werden die Teilabschnitte in die erforderliche räumliche Lage, in der sie die gewünschte gewölbte oder teilweise geschlossene Abschirmung bilden, dadurch gebracht, dass die Teilabschnitte entlang der Funktionslinie in geeigneter Weise abgewinkelt werden.

Die Abschirmteile des Standes der Technik sehen als Funktionslinie, die eine vorbestimmte Lageänderung der an die Funktionslinie angrenzenden Teilabschnitte ermöglichen soll, eine eine Biegesicke bildende Verformung des metallischen Werkstoffes des Abschirmteiles vor. Wie sich gezeigt hat, ergeben sich beim Verbau der bekannten Abschirmteile jedoch Probleme. Erfolgt das Abwinkeln der Teilabschnitte an der Biegesicke mit verhältnismäßig großem Biegewinkel besteht die Gefahr des Beulens des Materials oder der mangelnden Steifigkeit des Biegebereiches in Folge zu starker Materialbeanspruchung. Auch zeigt sich ein erhöhtes Rückfederungsverhalten nach erfolgtem Abwinkeln. Bei Abschirmteilen, die für mehrfache Montage vorgesehen sind, besteht die Gefahr, dass bei mehrfachem Verbau keine Formhaltigkeit gewährleistet ist.

Aus der US 2,576,698 ist ein Abschirmteil mit mehreren Teileinheiten bekannt, welche mittels einer aus Biegelinien gebildeten Funktionseinheit zueinander in eine vorgebbare räumliche Lage bringbar sind. Hierdurch wird eine individuelle Anpassung des Abschirmteils, insbesondere auch an kurvenförmige Objekte, ermöglicht.

Durch die EP 0 769 651 A ist ein gattungsgemäßes Abschirmteil bekannt, mit einzelnen benachbarten Teilabschnitten, die mittels einer Funktionseinheit in eine vorgebbare räumliche Lage zueinander entlang einer Funktionslinie bringbar sind, wobei die Funktionseinheit in Teileinheiten unterteilt entlang mindestens einer weiteren Funktionslinie, die mit einem vorgebbaren Abstand benachbart zu der einen Funktionslinie verläuft, die vorgebbare Lageeinstellung ermöglicht, und wobei zumindest Paare an Funktionslinien, die zumindest näherungsweise parallel zueinander verlaufen, vorgesehen sind. Auch bei dieser bekannten Lösung ist nicht ausgeschlossen, dass durch das Abwinkeln der Teilabschnitte entlang einer Funktionslinie, insbesondere bei verhältnismäßig großem Biegewinkel, die Gefahr des Beulens des Materials besteht oder der mangelnden Steifigkeit des Biegebereiches infolge zu starker Materialbeanspruchung, wobei sich auch ein erhöhtes Rückfederungsverhalten nach erfolgtem Abwinkeln zeigt.

Ausgehend von diesem Stand der Technik stellt sich die Erfindung die Aufgabe, ein Abschirmteil zu schaffen, bei dem die oben erwähnten Probleme hinsichtlich Montage und Betriebsverhalten vermieden sind.

Erfindungsgemäß ist diese Aufgabe durch ein Abschirmteil gelöst, das die Merkmale des Patentanspruches 1 in seiner Gesamtheit aufweist.

Die Aufgabe wird dabei insbesondere dadurch gelöst, dass als Teileinheit der Funktionseinheit eine zwischen den Biegelinien gelegene Versteifungseinheit vorgesehen ist.

Dadurch, dass die Funktionslinien der Funktionseinheit durch Biegelinien gebildet sind, die für die vorgebbare räumliche Lageeinstellung ein Abwinkeln von an die betreffende Biegelinie angrenzenden Teilabschnitten des Abschirmteiles entlang der Biegelinien ermöglichen, erfolgt die Lageeinstellung der relativ zueinander zu bewegenden Teilabschnitte nicht an einer einzigen Werkstoffpartie, sondern in zwei zueinander benachbarten, gesonderten Werkstoffbereichen. Dies bedeutet, dass in jedem Werkstoffbereich ein geringeres Ausmaß an Umformung stattfindet. Im Ergebnis ist weniger Kraft zur konturhaltigen Umformung notwendig. Hohe Steifigkeit des Biegebereiches, Formhaltigkeit trotz mehrfacher Montage und die Gefahr der Vermeidung des Beulens des Materials sind weitere Vorteile. Das Rückfederungsbestreben ist vermindert. Die Aufteilung auf mehrere Funktionslinien ermöglicht es auch, geschlossene Formen des Abschirmteiles auf einfache und sichere Weise herzustellen.

Sofern, wie dargelegt, die Funktionslinien durch Biegelinien gebildet sind, die am metallischen Werkstoff der Teilabschnitte vorgegeben sind, wird beim Abwinkeln der Teilabschnitte zu deren Lageeinstellung das Ausmaß der Werkstoffverformung auf beide nebeneinanderliegende, vorzugsweise parallele Biegelinien aufgeteilt. Im Ergebnis reduziert sich der für die Abwinkelung erforderliche Kraftaufwand und die Gefahr des Beulens des Werkstoffes ist in besonderem Maße verringert. Bei Ausführungsbeispielen, bei denen als Teileinheit der Funktionseinheit eine zwischen den Biegelinien gelegene Versteifungseinheit vorgesehen ist, ist zudem die Gefahr vermieden, dass im Biegebereich ein Verlust an Steifigkeit erfolgt, wie dies ansonsten bei mehrmaligem Abwinkeln, d. h. bei mehreren Montagevorgängen, zu befürchten wäre.

Die Biegelinien können in Form von Biegesicken vorgesehen sein, die durch U-förmige Verprägungen des metallischen Werkstoffes des Abschirmteiles gebildet sind.

Bei vorteilhaften Ausführungsbeispielen weist die Versteifungseinheit im Zwischenraum zwischen den Biegesicken mindestens ein Versteifungselement auf, wobei das Versteifungselement oder die Versteifungselemente den Zwischenraum zwischen den Biegesicken zumindest nahezu, vorzugsweise vollständig, überbrückt bzw. überbrücken.

Eine besonders sichere Versteifung ergibt sich, wenn eine Mehrzahl von Versteifungselementen in Form von Verprägungen des metallischen Werkstoffes des Abschirmteiles vorgesehen ist, vorzugsweise eine Aufeinanderfolge von zu den Biegesicken quer verlaufenden Steifigkeitssicken.

Die erfindungsgemäß vorgesehene Gestaltung der der Lageeinstellung der Teilabschnitte dienenden Funktionseinheit mit mehr als einer Funktionslinie ist besonders vorteilhaft, wenn Abschirmteile mit einer mehr oder weniger geschlossenen Form hergestellt werden sollen, die eine Hitzequelle wie einen Katalysator, mit rohrartigen Abschnitten umhüllen. Die Erfindung ermöglicht es, sozusagen "geschlossene" Formen ohne großen Kraftaufwand für die Formgebung herzustellen.

Nachstehend ist die Erfindung anhand der Zeichnungen im einzelnen erläutert. Es zeigen:
- Fig. 1 eine teils abgebrochen gezeichnete Draufsicht eines Abschirmteiles gemäß dem Stand der Technik, in Form eines zur Bildung einer Teilschale gewölbten Abschirmteiles;
- Fig. 2 eine abgebrochen gezeichnete Draufsicht des Zentralteiles eines Ausführungsbeispieles des erfindungsgemäßen Abschirmteiles das zur Bildung einer eine Hitzequelle abschirmenden Umhüllung in eine rohrartige, geschlossene Form bringbar ist, und
- Fig. 3 eine Endansicht des Ausführungsbeispieles, die die Teilabschnitte in der der geschlossenen Rohrform entsprechenden Lageeinstellung zeigt.

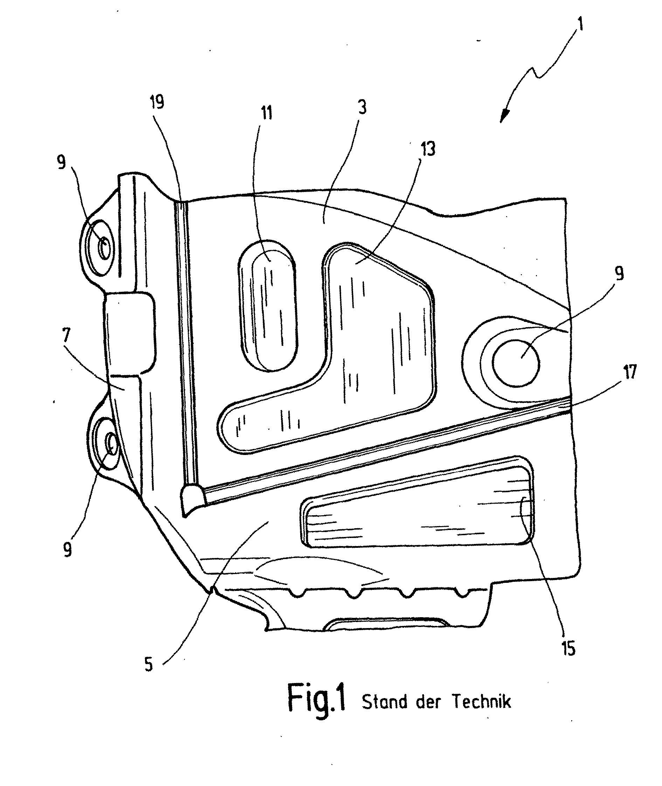

Fig. 1 zeigt die Außenseite eines Abschirmteiles gemäß dem Stand der Technik in Form eines schalenartig gewölbten, als Ganzes mit 1 bezeichneten Abschirmteiles aus metallischem Werkstoff, wobei es sich um ein Edelstahlblech handelt, bei einer Verwendung als Hitzeschild, vorzugsweise mit mehrlagigem Aufbau, der eine Wärmeisolationsschicht enthält. Bei dem in Fig. 1 gezeigten Beispiel besteht das Abschirmteil aus drei Teilabschnitte, einem im großen Ganzen ebenflächigen Hauptteil 3, einem gewölbten und aus der Hauptebene des Hauptteiles 3 abgewinkelten Seitenteil 5 und einem gegenüber dem Hauptteil 3 ebenfalls abgewinkelten Befestigungsteil 7 mit Befestigungslöchern 9. Der Hauptteil 3 ist ebenfalls durch ein Befestigungsloch 9 durchbrochen. Im übrigen befinden sich im Hauptteil 3 muldenartige Einprägungen 11 und 13 zur Erhöhung der Steifigkeit des Hauptteiles 3 und zur Vibrationsdämpfung. Eine entsprechende, muldenartige Einprägung 15 befindet sich im Seitenteil 5.

Für die Abwinkelung von Seitenteil 5 und Befestigungsteil 7 gegenüber dem Hauptteil 3 sind zwischen diesen genannten Teilabschnitten Biegelinien vorgegeben, bei denen es sich um eine Biegesicke 17 bzw. eine Biegesicke 19 handelt. Die den Hauptteil 3 mit dem Seitenteil 5 verbindende Biegesicke 17 definiert die Biegelinie für die Abwinkelung des Seitenteiles 5. Die Biegesicke 19 definiert die Biegelinie für die Abwinkelung des Befestigungsteils 7.

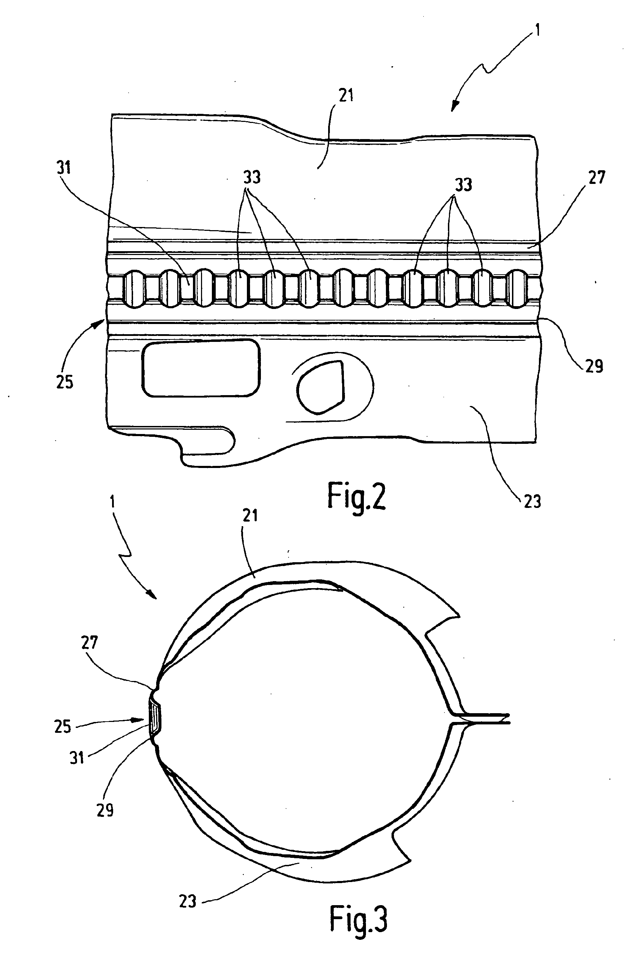

Die Fig. 2 und 3 zeigen ein Ausführungsbeispiel des erfindungsgemäßen Strukturbauteiles Abschirmteiles 1 in Form eines Abschirmteiles, das als Hitzeschild für eine Hitzequelle, wie einen Katalysator, vorgesehen ist, wobei das Abschirmteil 1 in die in Fig. 3 gezeigte, geschlossene Form bringbar ist, in der es einen die Hitzequelle umgebenden Wärmeschild bildet. Wie bei der dem Stand der Technik entsprechenden, in Fig. 1 gezeigten Lösung, ist das Abschirmteil 1 durch einen Laminatwerkstoff mit Edelstahlblechen und Wärme isolierender Zwischenschicht gebildet. Zwei Teilabschnitte, die bei der in Fig. 3 gezeigten geschlossenen Form jeweils einen Halbrohrteil bilden, sind mit 21 und 23 bezeichnet. Die Teilabschnitte 21 und 23 hängen über eine als Ganzes mit 25 bezeichnete Funktionseinheit miteinander zusammen, die den Bereich darstellt, entlang dem die Lageeinstellung der Teilabschnitte 21 und 23 relativ zueinander erfolgt, um die Teilabschnitte 21 und 23 aus einer mehr oder weniger gestreckten Position in die in Fig. 3 gezeigte geschlossene Form überzuführen.

Während beim Stand der Technik diese Lageeinstellung in der Weise erfolgt, dass der Vorgang des Abwinkelns des Seitenteiles 5 gegenüber dem Hauptteil 3 an einer einzigen Biegelinie, der Biegesicke 17, erfolgt und das Abwinkeln des Befestigungsteils 7 vom Hauptteil 3 an einer einzigen Biegelinie, der Biegesicke 19 erfolgt, ist bei der Erfindung die Funktionseinheit 25, die der Abwinkelung der angrenzenden Teilabschnitte 21 und 23 dient, in Teileinheiten unterteilt, zu der zwei nebeneinander liegende Biegelinien gehören, nämlich eine erste Biegesicke 27 und eine zweite Biegesicke 29. Als weitere Teileinheit der Funktionseinheit 25 ist eine zwischen den Biegesicken 27 und 29 gelegene Versteifungseinheit 31 vorgesehen.

Im Gegensatz zum Stand der Technik ist die Werkstoffumformung beim Abwinkeln der Teilabschnitte 21 und 23 auf zwei Biegelinien aufgeteilt, wodurch sich die bereits weiter oben erwähnten Vorteile bei Formung und Verbau des Abschirmteiles 1 ergeben. Die Versteifungseinheit 31 weist eine dichte Aufeinanderfolge von Versteifungssicken 33 (nicht sämtliche in Fig. 2 bezeichnet) auf, die sich quer zu den Biegesicken 27 und 29 im Zwischenraum zwischen diesen erstrecken. Die Versteifungseinheit 31 bildet dadurch einen steifen Biegebereich, der Formhaltigkeit trotz mehrfacher Montagevorgänge (Abwinkelungen) gewährleistet. Zudem lassen sich die Teilabschnitte 21 und 23 ohne großen Kraftaufwand und ohne die Gefahr des Beulens des Werkstoffes in die in Fig. 3 gezeigte geschlossene Form bringen.

An Stelle der für die Versteifungseinheit 31 gezeigten Versteifungselemente in Form der quer verlaufenden Versteifungssicken 33 könnten anders gestaltete Versteifungselemente vorgesehen sein, beispielsweise Verprägungen mit schräg zu den Biegesicken 27, 29 verlaufender oder dazu längs verlaufender Form oder unregelmäßig geformte Verprägungen. Es liegt noch im Bereich der Erfindung die beiden Funktionslinien 27, 29 unparallel, insbesondere winklig, zueinander anzuordnen, um damit eine keil- oder kegelförmige Formgebung der angrenzenden Teilabschnitte 21, 23 zu erreichen.

## Patentansprüche

1. Abschirmteil (1) mit einzelnen benachbarten Teilabschnitten (21, 23), die zumindest teilweise mittels einer Funktionseinheit (25) in eine vorgebbare räumliche Lage zueinander entlang einer Funktionslinie (27) bringbar sind, wobei die Funktionseinheit (25), in Teileinheiten unterteilt, entlang mindestens einer weiteren Funktionslinie (29), die mit einem vorgebbaren Abstand benachbart zu der einen Funktionslinie (27) verläuft, die vorgebbare Lageeinstellung ermöglicht, wobei die Funktionslinien der Funktionseinheit durch Biegelinien (27, 29) gebildet sind, die für die vorgebbare räumliche Lageeinstellung ein Abwinkeln von an die betreffende Biegelinie angrenzenden Teilabschnitten (21, 23) des Abschirmteiles (1) entlang der Biegelinien (27, 29) ermöglichen, **dadurch gekennzeichnet, dass** als Teileinheit der Funktionseinheit eine zwischen den Biegelinien (27, 29) gelegene Versteifungseinheit (31) vorgesehen ist.

2. Abschirmteil nach Anspruch 1, **dadurch gekennzeichnet, dass** zwei Funktionslinien (27, 29), die zumindest näherungsweise parallel zueinander verlaufen, vorgesehen sind.

3. Abschirmteil nach Anspruch 1 oder 2, **dadurch gekennzeichnet, dass** Biegelinien in Form von Biegesicken (27, 29) vorgesehen sind, die durch U-förmige Verprägungen des metallischen Werkstoffes des Strukturbauteiles (1) gebildet sind.

4. Abschirmteil nach Anspruch 3, **dadurch gekennzeichnet, dass** die Versteifungseinheit (31) mindestens ein Versteifungselement (33) im Zwischenraum zwischen den Biegesicken (27, 29) aufweist, dergestalt, dass ein Versteifungselement (33) oder mehrere Versteifungselemente (33) den Zwischenraum zumindest nahezu, vorzugsweise vollständig, überbrückt bzw. überbrücken.

5. Abschirmteil nach Anspruch 4, **dadurch gekennzeichnet, dass** eine Mehrzahl von Versteifungselementen (33) in Form von Verprägungen des metallischen Werkstoffes des Strukturbauteiles vorgesehen ist.

6. Abschirmteil nach Anspruch 5, **dadurch gekennzeichnet, dass** die Verprägungen in Form einer Aufeinanderfolge von zu den Biegesicken (27, 29) quer verlaufenden Steifigkeitssicken (33) gestaltet sind.

7. Abschirmteile nach einem der Ansprüche 1 bis 6, **dadurch gekennzeichnet, dass** es als Abschirmteil ausgebildet ist, das zwei miteinander einstückige Teilabschnitte (21, 23) halbrohrartiger Gestalt aufweist, die über die in Rohrlängsrichtung verlaufende Funktionseinheit (25) miteinander zusammen hängen, so dass das Abschirmteil durch Lageeinstellung der Teilabschnitte (21, 23) entlang der Funktionslinien (27, 29) der Funktionseinheit (25) in eine seitlich geöffnete Rohrform und in die Form eines geschlossenen Rohrkörpers (Fig. 3) bringbar ist.

## Claims

1. Shielding part (1) comprising individual adjacent partial sections (21, 23), which can be brought at least partially into a pre-determinable spatial position relative to one another along a functional line (27) by means of a functional unit (25), the functional unit (25), being divided into partial units, enabling the pre-determinable positional adjustment along at least one further functional line (29) extending at a pre-determinable distance adjacent to the one functional line (27), wherein the functional lines of the functional units are formed by bending lines (27, 29) that enable partial sections (21, 23) of the shielding part (1) which are adjacent to the bending line concerned to be bent along the bending lines (27, 29) for the pre-determinable spatial positional adjustment, **characterised in that** a stiffening unit (31) located between the bending lines (27, 29) is provided as a partial unit of the functional unit.

2. Shielding part according to claim 1, **characterised in that** two functional lines (27, 29) are provided which extend at least approximately parallel to one another.

3. Shielding part according to claim 1 or 2, **characterised in that** bending lines are provided in the form of bending beads (27, 29), which are formed by U-shaped stamped portions of the metallic material of the structural component (1).

4. Shielding part according to claim 3, **characterised in that** the stiffening unit (31) comprises at least one stiffening member (33) in the intermediate space between the bending beads (27, 29), in such a way that one stiffening member (33) or several stiffening members (33) at least almost, preferably completely, bridge(s) the intermediate space.

5. Shielding part according to claim 4, **characterised in that** a plurality of stiffening members (33) is provided in the form of stamped portions of the metallic material of the structural component.

6. Shielding part according to claim 5, **characterised in that** the stamped portions are configured in the form of a succession of rigidity beads (33) extending transversely to the bending beads (27, 29).

7. A shielding part according to any one of the claims 1 to 6, **characterised in that** it is configured as a shielding part comprising two partial sections (21, 23) that are integral with each other and have a semitubular form, which are linked to each other through the functional unit (25) that extends in the longitudinal direction of the tube, so that the shielding part can be brought into a laterally opened tube shape and into the shape of a closed tube body (Fig. 3) by positional adjustment of the partial sections (21, 23) along the functional lines (27, 29) of the functional unit (25).

## Revendications

1. Pièce formant écran (1) avec des tronçons partiels individuels voisins (21, 23), qui peuvent être amenés au moins partiellement au moyen d'une unité fonctionnelle (25) jusque dans une position prédéterminée dans l'espace les uns par rapport aux autres le long d'une ligne fonctionnelle (27), dans laquelle l'unité fonctionnelle (25), subdivisées en unités partielles, permet le réglage en position prédéterminée le long d'au moins une autre ligne fonctionnelle (25), laquelle s'étend à une distance prédéterminée au voisinage de la première ligne fonctionnelle (25), et les lignes fonctionnelles de l'unité fonctionnelle sont formées par des lignes de pliage (27, 29) qui, pour le réglage en position prédéterminée dans l'espace, permettent aux tronçons partiels (21, 23), de la pièce formant écran (1), adjacents à la ligne de pliage concernée, de se mettre sous un angle le long des lignes de pliage (27, 29), **caractérisée en ce qu'**il est prévu à titre d'unité partielle de l'unité fonctionnelle une unité de rigidification (31) placée entre les lignes de pliage (27, 29).

2. Pièce formant écran selon la revendication 1, **caractérisée en ce qu'**il est prévu deux lignes fonctionnelles (27, 29) qui s'étendent au moins approximativement parallèlement l'une à l'autre.

3. Pièce formant écran selon la revendication 1 ou 2, **caractérisée en ce qu'**il est prévu des lignes de pliage sous la forme de moulures de pliage (27, 29) qui sont formées par des empreintes en forme de U du matériau métallique de la pièce structurelle (1).

4. Pièce formant écran selon la revendication 3, **caractérisée en ce que** l'unité de rigidification (31) comprend au moins un élément de rigidification (33) dans l'espace intermédiaire entre les moulures de pliage (27, 29), de telle manière qu'un élément de rigidification (33) ou plusieurs éléments de rigidification (33) comble(nt) ou coiffe(nt) au moins presque totalement et de préférence totalement l'espace intermédiaire.

5. Pièce formant écran selon la revendication 4, **caractérisée en ce qu'**il est prévu une pluralité d'éléments de rigidification (33) sous la forme d'empreintes du matériau métallique de la pièce structurelle.

6. Pièce formant écran selon la revendication 5, **caractérisée en ce que** les empreintes sont conçues sous la forme d'une succession de moulures de rigidification (33) s'étendant transversalement par rapport aux moulures de pliage (27, 29).

7. Pièce formant écran selon l'une des revendications 1 à 6, **caractérisée en ce qu'**elle est réalisée comme une pièce formant écran qui comprend deux tronçons partiels (21, 23) d'un seul tenant l'un avec l'autre et de configuration semblable à un demi-tube, lesquels sont assemblés l'un à l'autre via l'unité fonctionnelle (25) s'étendant dans la direction longitudinale des tubes, de telle façon que la pièce formant écran peut être amenée, par réglage de la position des tronçons partiels (21, 23) le long des lignes fonctionnelles (27, 29) de l'unité fonctionnelle (25) dans un moule tubulaire ouvert latéralement et être mise sous la forme d'un corps tubulaire fermé (figure 3).
